# EUROPEAN PATENT APPLICATION

(11) **EP 3 148 175 A1**
(43) Date of publication of application: **29.03.2017**
(21) Application number: 16165083.3
(22) Date of filing: 13.04.2016
(51) Int. Cl.: H04N 5/225, H04N 5/232, H04N 5/262

(54) **CAMERA MODULE AND MOBILE TERMINAL COMMUNICATING WITH THE SAME**

(30) Priority: 24.09.2015 KR 20150135720
(71) Applicant: LG Electronics Inc., Seoul 07336 (KR)
(72) Inventor: KIM, Hyunjung, Seoul 06772 (KR); LEE, Euiseok, Seoul 06772 (KR); BANG, Junseok, Seoul 06772 (KR); MA, Yongbeom, Seoul 06772 (KR); LEE, Jaekul, Seoul 06772 (KR); JUNG, Daeyoung, Seoul 06772 (KR); LEE, Chulbae, Seoul 06772 (KR)
(74) Representative: Cabinet Plasseraud

(57) **Abstract**

A camera module includes: a body to have buoyancy such that, when in a floated state, a first part of the body is exposed to outside of water while a second part of the body is immersed in the water; a first camera at the body to be immersed in the water when the body is in the floated state; and a second camera at the body to be exposed to the outside of the water when the body is in the floated state, wherein the first camera is configured to capture a first image corresponding to the immersion in the water, and the second camera is configured to capture a second image corresponding to outside of the water.

## Description

### BACKGROUND OF THE INVENTION

### 1. Field of the Invention

The present invention relates to a camera module and a mobile terminal configured to communicate with the camera module.

### 2. Background of the Invention

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Various attempts have been made to implement complicated functions in such a multimedia device by means of hardware or software.

Recently, research on a camera module, which can be used in a separated/interworked manner from/with a terminal body is being actively ongoing.

Further, research on a camera module, which can be used while a user is swimming in water or is enjoying sports, is being actively ongoing.

However, the conventional camera module is formed to capture an image corresponding to an internal space of water, or an image corresponding to an external space of the water. Accordingly, the present invention provides a camera module capable of capturing images corresponding to internal and external spaces of water.

### SUMMARY OF THE INVENTION

Therefore, an aspect of the detailed description is to provide a camera module capable of simultaneously capturing images corresponding to internal and external spaces of water.

Another aspect of the detailed description is to provide a camera module capable of capturing images at various viewing angles.

Another aspect of the detailed description is to provide a mobile terminal capable of outputting images corresponding to internal and external spaces of water, even if it is considerably spaced from the camera module.

To achieve these and other advantages and in accordance with the purpose of this specification, as embodied and broadly described herein, there is provided a camera module, including: a body to have buoyancy such that, when in a floated state, a first part of the body is exposed to outside of water while a second part of the body is immersed in the water; a first camera at the body to be immersed in the water when the body is in the floated state; and a second camera at the body to be exposed to the outside of the water when the body is in the floated state, wherein the first camera is configured to capture a first image corresponding to the immersion in the water, and the second camera is configured to capture a second image corresponding to outside of the water.

In an embodiment of the present invention, the first camera and the second camera are provided along a lengthwise direction of the body.

In an embodiment of the present invention, the camera module may further comprise a weight center forming unit at an inner area of the second part of the body.

In an embodiment of the present invention, the camera module may further comprise a wireless communication unit at the body. In response to the wireless communication unit receiving a control command for changing an arrangement of the first and second cameras, the weight center forming unit is moved within the inner area such that the body moves.

In an embodiment of the present invention, the camera module may further comprise a rotation device to rotatably couple to the body. The first and second cameras are coupled to the rotation device so as to be rotatable with respect to the body.

In an embodiment of the present invention, the camera module may further comprise a wireless communication unit at the body. In response to the wireless communication unit receiving a control command for changing an arrangement of the first and second cameras, the rotation device is to rotate such that the first and second cameras are arranged along a widthwise direction of the body.

In an embodiment of the present invention, when the body is entirely in water or is entirely outside of the water, the rotation device is to rotate such that the first and second cameras are arranged along a widthwise direction of the body.

In an embodiment of the present invention, the camera module may further comprise a supplementary body to couple to the body. The supplementary body is configured as either a propellant for providing a driving force to the body, or a pin for controlling a posture of the body.

In an embodiment of the present invention, the camera module may further comprise a wireless communication unit at the body for communicating with an external device. Information regarding an event is received at the wireless communication unit when the event occurs at the external device. The body to provide notification information indicating occurrence of the event.

To achieve these and other advantages and in accordance with the purpose of this specification, as embodied and broadly described herein, there is also provided a mobile terminal configured to receive at least one of the first image and the second image, from the camera module, the mobile terminal including: a terminal body; a display at a surface of the terminal body; and a controller configured to control the display such that the first image corresponding to immersion in the water is output at a first region of the display, and the second image corresponding to outside of the water is output at a second region of the display, in response to a control command for displaying both the first and second images.

In an embodiment of the present invention, the controller controls the display such that the first image is contracted by a preset magnification based on a received state of the first image. The controller controls the display such that the second image is enlarged by a preset magnification based on a received state of the second image.

In an embodiment of the present invention, in response to a preset touch input at the display while the first and second images are displayed, the controller controls the display such that a ratio between a display region of the first image and a display region of the second image is variable.

In an embodiment of the present invention, in response to a control command for outputting only one of the first and second images, the controller determines an image to be output at the display.

In an embodiment of the present invention, in response to a user's request related to image conversion at the display, the controller controls the display such that another of the first and second images is displayed.

In an embodiment of the present invention, the camera module may further comprise a sensing device for sensing a posture and a motion of the terminal body. The controller determines whether the display is arranged in a lengthwise direction or a widthwise direction, based on the sensed posture of the terminal body. When the controller determines that the display is arranged in the lengthwise direction, the controller controls the display to display both the first and second images. When the controller determines that the display is arranged in the widthwise direction, the controller controls the display to display only one of the first and second images.

In an embodiment of the present invention, in response to a user's request to output screen information not including the first and second images, the controller controls the display such that an image object indicating that the images are being received, is displayed together with the screen information.

In an embodiment of the present invention, in response to a preset touch input at the image object, the controller controls the display such that at least one of the first and second images is overlapped with the screen information.

In an embodiment of the present invention, in response to a user's request to output screen information not including the first and second images, the controller controls the display such that at least one of the first and second images is displayed at a first region of the display and the screen information is displayed at a second region of the display.

In an embodiment of the present invention, when an object has not been sensed for more than a preset time within the second image corresponding to the outside of the water, the controller controls the display to output notification information.

In an embodiment of the present invention, in response to a user's request to store the image displayed at the display, the controller controls the memory to store therein at least one of the first and second images that is displayed at the display.

To achieve these and other advantages and in accordance with the purpose of this specification, as embodied and broadly described herein, there is provided a camera module, including: a body to float in a liquid such that a first body part is exposed to outside of the liquid while a second body part is immersed in the liquid; a first camera to capture a first image when the first camera is immersed in the liquid; a second camera to capture a second image when the second camera is outside of the water; a wireless communication unit to transmit the first image and the second image; and a weight center forming unit to move within the body and cause the body to move.

In an embodiment of the present invention, the camera module may further comprise a rotation device to move the first camera and the second camera relative to the body.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram for explaining a mobile terminal according to the present invention;
FIGS. 1B and 1C are conceptual views of a mobile terminal according to the present invention, which are viewed from different directions;
FIG. 2A is a block diagram illustrating components of a camera module according to the present invention;
FIGS. 2B and 2C are conceptual views illustrating components of a camera module according to the present invention;
FIG. 3A is a conceptual view illustrating a floating state of a camera module according to the present invention on a water surface;
FIGS. 3B and 3C are conceptual views illustrating a change of an arranged state of cameras according to the present invention;
FIG. 4A is a conceptual view illustrating an operation of a rotation unit of a camera module according to the present invention;
FIGS. 4B and 4C are conceptual views illustrating rotation of the rotation unit based on a signal value by a sensing unit of the camera module according to the present invention;
FIGS. 5A to 5D are conceptual views related to a type and a function of a supplementary body according to the present invention;
FIGS. 6A, 6B, 7A and 7B are conceptual views related to a type and a function of an external device which communicates with a camera module according to the present invention;
FIG. 8 is a conceptual view illustrating a method for controlling a mobile terminal related to output of first and second images;
FIG. 9 is a conceptual view illustrating a method for controlling a mobile terminal according to an embodiment of the present invention, which is related to compensation of first and second images;
FIG. 10 is a conceptual view illustrating a method for controlling the mobile terminal according to an embodiment of the present invention, where a size of output regions of first and second images on a display unit is changed;
FIG. 11 is a conceptual view illustrating a method for controlling a mobile terminal, where a posture of a subject is analyzed based on information about the subject, and feedback information is generated based on the analyzed posture;
FIG. 12 is a conceptual view illustrating a method for controlling an image to be output between first and second images, based on an arrangement direction of a display unit, according to an embodiment of the present invention;
FIG. 13 is a conceptual view illustrating a control method related to output of at least one of first and second images, and output of screen information not including the first and second images;
FIG. 14 is a conceptual view illustrating a control method related to output of notification information, based on whether a subject included in a second image has been sensed or not, according to an embodiment of the present invention; and
FIG. 15 is a conceptual view illustrating a control method related to storage of an image in a state where music data selected by a user has been inserted into the image.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

In explaining the following descriptions with respect to the attached drawings, in a case where at least two images are illustrated in a single drawing (FIG. N) in the form of 2 by 2, an image illustrated on a left upper side is called "first drawing", an image illustrated on a right upper side is called "second drawing", an image illustrated on a right lower side is called "third drawing", and an image illustrated on a left lower side is called "fourth drawing".

In a case where at least two images are illustrated in a line in a direction toward a lower end from an upper end, an image disposed on the uppermost end is called "first drawing", and the rest images are called "second drawing, third drawing .........." in order.

In a case where at least two images are illustrated in a line in a direction toward a right end from a left end, an image disposed on the leftmost end is called "first drawing", and the rest images are called "second drawing, third drawing .........." in order.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

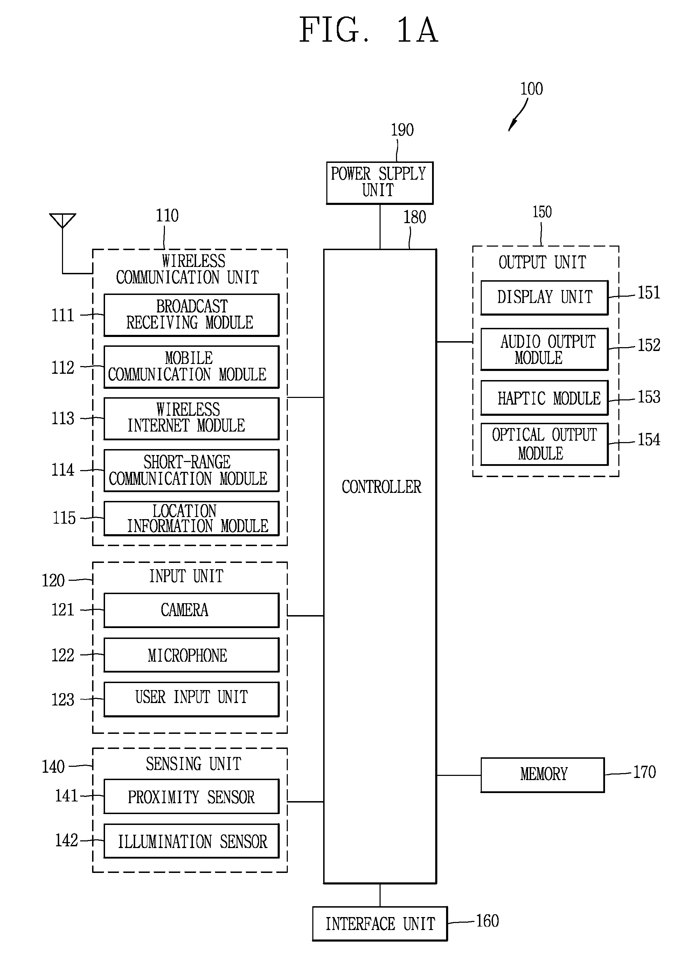

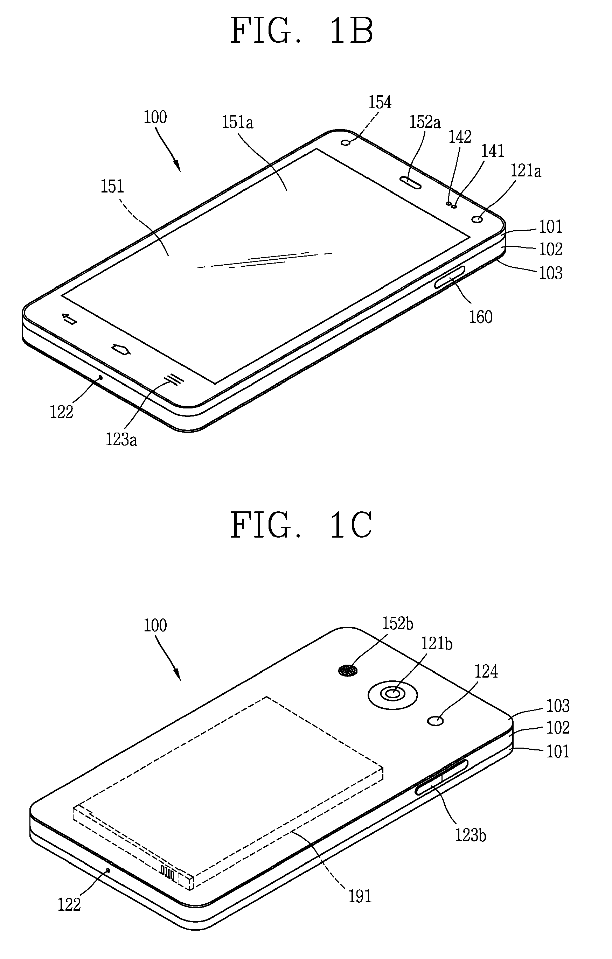

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method for a glass type terminal according to various embodiments to be explained later. The operation or the control method for the glass type terminal may be implemented on the glass type terminal by driving at least one application program stored in the memory 170.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121 b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151 a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151 a of the display unit 151 will typically include an aperture to permit audio generated by the first audio output module 152a to pass. One alternative is to allow audio to be released along an assembly gap between the structural bodies (for example, a gap between the window 151 a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121 a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121 a. If desired, second camera 121 a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121 b. When an image of a subject is captured with the camera 121 b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

The mobile terminal 100 of the present invention may be implemented to communicate with a camera module 200.

The camera module 200 and the mobile terminal 100 may be spaced apart from each other. That is, the camera module 200 may transmit one or more images captured thereby to the mobile terminal 100, even if it is considerably spaced from the mobile terminal 100 by a long distance. The mobile terminal 100 may output the received image on the display unit 151. Owing to the camera module 200, a spatial restriction of the cameras 121 a, 121b mounted in the terminal body may be overcome.

The image of the present invention may mean a still image, a moving image, a 3D stereoscopic image, etc.

A region of the display unit 151 where the image is output may have the same size as the display unit 151, or may have a smaller size than the display unit 151.

The camera module according to the present invention may be formed to be suitable for an environment where water is found nearby. More specifically, the camera module may be formed to execute image capturing in a floated state on a water surface.

The camera module according to the present invention will be explained in more detail with reference to the attached drawings.

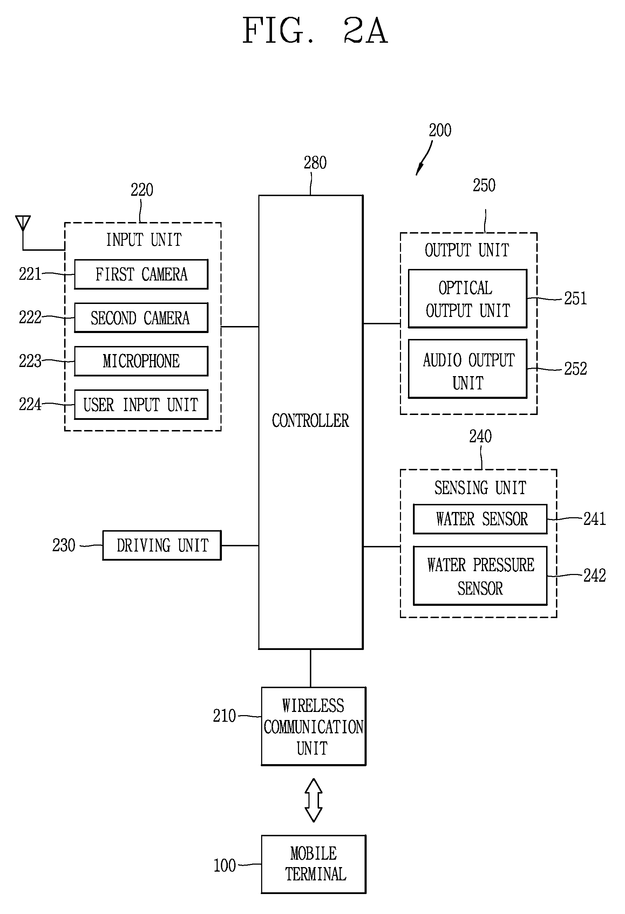

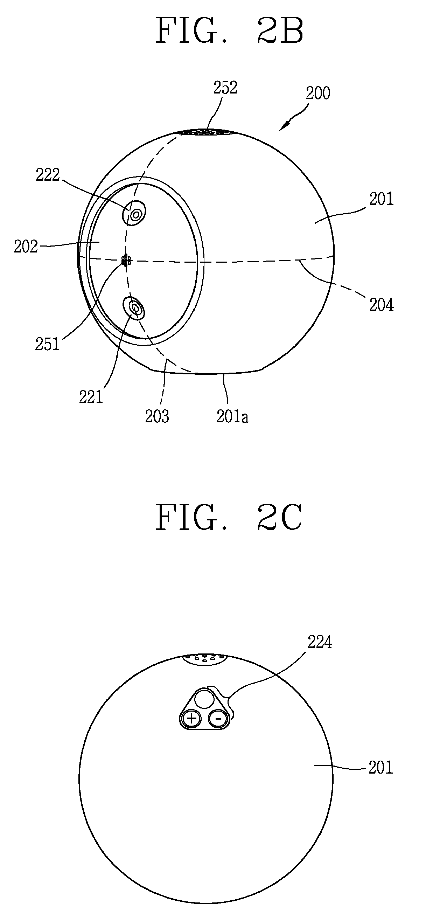

FIG. 2A is a block diagram illustrating components of a camera module according to the present invention. FIGS. 2B and 2C are conceptual views illustrating components of a camera module according to the present invention.

The camera module according to the present invention may include at least one of the components aforementioned with reference to FIG. 1A. Referring to FIG. 2A, the camera module may include at least one of a wireless communication unit, an input unit, a driving unit, a sensing unit, an output unit and a controller. The following descriptions will be made based on the components of FIG. 2A, and additional or supplementary descriptions will be replaced by those aforementioned with reference to FIG. 1A.

The wireless communication unit 210 may include one or more modules for enabling wireless communication between the camera module 200 and the mobile terminal 100, between the camera module 200 and a wireless communication system, between the camera module 200 and the camera module 200, or between the camera module 200 and an external server. The wireless communication unit 210 may include one or more modules for connecting the camera module 200 to one or more networks. Detailed descriptions of the wireless communication unit 210 will be replaced by those aforementioned with reference to FIG. 1A.

The input unit 220 may include a first camera 221, a second camera 222, a microphone 223 and a user input unit 224.

The first and second cameras 221, 222 may be formed to capture images with respect to a peripheral environment of the camera module 200. At least one of images captured by the first and second cameras 221, 222 may be transmitted to the aforementioned mobile terminal 100 through the wireless communication unit 210. The camera module 200 according to the present invention may be further provided with other cameras rather than the first and second cameras 221, 222.

The microphone 223 processes an audio signal generated from the periphery of the camera module 200, into electric voice data. The processed voice data may be transmitted to the mobile terminal 100 via the wireless communication unit 210.

The user input unit 224 is formed to receive information from a user. Once information is input through the user input unit 224, a controller 280 may control an operation of the camera module 200 in correspondence to the input information. For instance, the user input unit 224 may include a volume control button formed at the terminal body, a power button, etc. Once information is input through the volume control button, the controller may control a signal intensity of audio data output from an audio output unit 252. Detailed descriptions of the user input unit 224 will be replaced by those aforementioned with reference to FIG. 1A.

The driving unit 230 may apply an electromagnetic force or a mechanical physical force in order to rotate or move the components of the camera module 200. For instance, the driving unit 230 may include a coil magnet, and may move a weight center forming unit 231 using an electromagnetic force generated from the coil magnet. Alternatively, the driving unit 230 may include a motor for rotating a rotation unit 202.

The sensing unit 240 may sense at least one of internal information of the camera module 200 and external information of the camera module 200, and may generate corresponding sensing signals. The sensing unit 240 may be composed of one or more sensors.

More specifically, referring to FIG. 2A, the sensing unit 240 may include a water sensor 241 and a water pressure sensor 242.

The water sensor 241 may sense whether water has contacted one side of a body 201 of the camera module 200. Further, the water sensor 241 may sense a position on the body 201 of the camera module 200, the position to which water has contacted. For instance, when water has splashed onto the body 201, the water sensor 241 may sense a direction from which the water has splashed.

The water pressure sensor 242 may sense information about a depth of water where the camera module 200 is positioned, based on a water pressure applied to the body 201 of the camera module 200. The controller 280 may determine whether the camera module 200 has been entirely immersed in the water, whether the camera module 200 has been partially immersed in the water, whether the camera module 200 has been entirely exposed to the outside of the water, etc. based on the information.

The output unit 250 may output information about the camera module 200 or the mobile terminal 100 in a visible, audible or tactile manner, for a user's recognition. The output unit 250 may include an optical output unit 251, an audio output unit 252, a haptic output unit, and a display unit.

If an event occurs from an external device which communicates with the camera module 200, information indicating the occurrence of the event may be output to the optical output unit 251 and the audio output unit 252. Detailed descriptions thereof will be explained with reference to the attached drawings.

The optical output unit 251 may include an LED device and a laser output unit.

The LED device may output light of various colors. The controller 280 may control the LED device based on various situations, such that light of a color corresponding to a current situation may be output. For instance, if it is determined that a current situation is a preset urgent situation, the controller 280 may control the LED device such that light of a color corresponding to the current situation (e.g., flickering red light) may be output. A user, who is far from the camera module, may recognize that an urgent situation has occurred from a peripheral space of the camera module.

The laser output unit may be disposed on the body so as to be toward the same direction as the first and second cameras 221, 222. Thus, an image of laser emitted from the laser output unit may be focused on a subject captured by the first and second cameras 221, 222. In this case, a user may easily check a subject to be captured by the first and second cameras 221, 222. Laser of a preset intensity may be output from the laser output unit. For instance, if a control command related to output of laser is received through the wireless communication unit, the controller may control the laser output unit to output laser.

The audio output unit 252 may include a speaker. The speaker may output voice data received through the wireless communication unit 201, into an audio signal. For instance, the voice data may be data related to music preset by a user. In this case, the user may have fun in water, listening to the music.

The controller 280 may control the speaker based on various situations, such that an audio signal corresponding to a current situation may be output. For instance, if it is determined that a current situation is a preset urgent situation, the controller 280 may control the speaker such that voice data (e.g., 'help me') corresponding to the current situation may be output. A user, who is far from the camera module, may recognize that an urgent situation has occurred from a peripheral space of the camera module. Further, the user may rapidly check a position of the camera module.

The controller 280 may operate functions of the camera module 200 by controlling the aforementioned components. For instance, the controller 280 may control the driving unit 230 using information generated based on sensing signals sensed by the sensing unit 240.

So far, the components of the camera module 200 according to the present invention have been explained. Hereinafter, a structure of the camera module 200 according to the present invention will be explained with reference to FIGS. 2B and 2C.

Referring to FIG. 2B, the camera module 200 according to the present invention may include a body 201, and first and second cameras 221,222 disposed on the body 201.

The body 201 forms appearance of the camera module 200. More specifically, the body 201 may be formed to have a spherical shape. However, the present invention is not limited to this, but the body 201 may be formed to have various shapes.

At least part of the aforementioned components of the camera module 200 may be arranged at an inner space of the body 201.

For instance, the aforementioned speaker may be arranged at an inner space of the body 201. More specifically, the speaker may be disposed at an upper space of the body 201. And a sound hole 252, through which an audio signal output from the speaker is transmitted to the outside, may be formed at an upper part of the body 201.

The body 201 may be formed of a waterproof material. Thus, even if the camera module 200 is in a floated state on a water surface, the electronic components disposed in the body 201 may not be influenced by water.

A lower part of the body 201 may have a flat surface 201 a. As the flat surface 201 a of the body 201 comes in contact with a ground surface, the camera module 200 may be stably supported on the ground surface.

Referring to FIG. 2C, the aforementioned user input unit 224 may be disposed on the body 201 at an opposite side to a mounting surface of the first and second cameras 221, 222.

The first and second cameras 221, 222 may be mounted to the body 201. In the drawings, the first and second cameras 221, 222 are mounted to the rotation unit 202, and the rotation unit 202 is connected to the body 201. However, the present invention is not limited to this. That is, the first and second cameras 221,222 may be directly mounted to the body 201.

More specifically, the first and second cameras 221, 222 may be disposed at the inner space of the body 201. In this case, an incidence surface for making external light be incident to the inside of the first and second cameras 221, 222 may be formed at the body 201, in correspondence to the inner space where the first and second cameras 221, 222 are arranged. The incidence surface may be formed of a lens, or protective glass for protecting the lens.

So far, the body 201 of the camera module 200, and the first and second cameras 221, 222 have been explained.

In the present invention, in a floated state of the camera module 200 on a water surface, one of the first and second cameras 221, 222 may be immersed in water, and another thereof may be disposed outside the water. This will be explained in more detail with reference to the attached drawings.

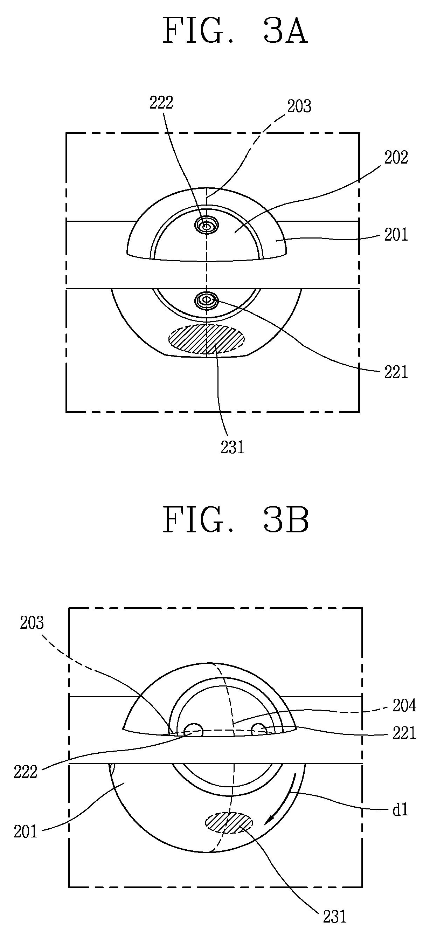

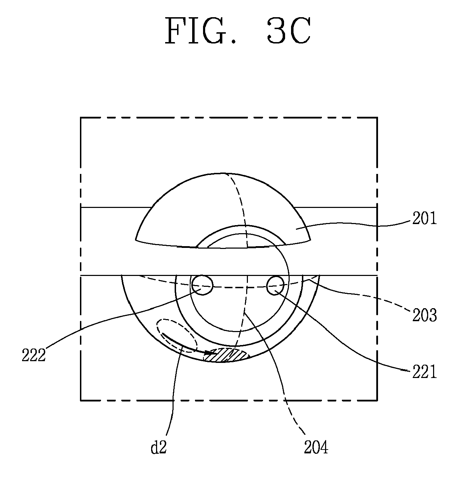

FIG. 3A is a conceptual view illustrating a floating state of the camera module according to the present invention on a water surface, and FIGS. 3B and 3C are conceptual views illustrating a change of an arranged state of cameras according to the present invention.

Referring to FIG. 3A, the body 201 may be formed to have buoyancy such that at least part thereof may be exposed to the outside of water while at least part thereof may be immersed in the water. With such a configuration, if no external force is applied to the body 201 which is in a floated state on a water surface, at least part of the body 201 is immersed in water, and at least part of the body 201 is exposed to the outside of the water.

Specifically, the body 201 may be manufactured to have buoyancy such that at least part thereof may be exposed to the outside of water while at least part thereof may be immersed in the water.

More specifically, the body 201 may be manufactured such that a weight of water, which corresponds to a volume of part of the body 201 immersed in water, may be almost same as an entire weight of the body 201.

For instance, if a ratio between a volume of part of the body 201 immersed in water and an entire volume of the body 201 is fixed, a density of the body 201 is controlled. As a result, the body 201 may have buoyancy such that at least part thereof may be exposed to the outside of water while at least part thereof may be immersed in the water.

The density of the body 201 may mean a value obtained by adding a mass of the body 201 to a mass of electronic components such as the cameras provided at the inner space of the body 201, and then by dividing the entire mass by an entire volume of the body 201. Thus, the density of the body 201 may be controlled based on a material of the body 201, a size of an air bag provided at the inner space of the body 201, etc. The control of the density of the body 201 is merely exemplary, and the density of the body 201 may be controlled in various manners.

As aforementioned, the body 201 may be formed such that at least part thereof may be immersed in water and at least part thereof may be disposed outside the water, in a floated state on a water surface.

Part of the body 201 to be immersed in water, and part of the body 201 to be exposed to the outside of the water may be determined based on an arranged state of various types of electronic components disposed at the inner space of the body 201.

That is, part of the body 201 where relatively heavier electronic components are arranged may be immersed in water, and part of the body 201 where relatively lighter electronic components are arranged may be exposed to the outside of the water.

Referring to FIG. 3A, part of the body 201 to be immersed in water may be determined based on a position of a weight center forming unit 231 disposed at the inner space of the body 201. Upon determination of the part of the body 201 to be immersed in water, part of the body 201 to be exposed to the outside of the water may be also determined.

The weight center forming unit 231 may be disposed at the inner space of the body 201, on a region rather than a central region. Thus, if the body 201 is in a floated state on a water surface, part where the weight center forming unit 231 is arranged may be immersed in water, and part where the weight center forming unit 231 is not arranged may be exposed to the outside of the water.

That is, the weight center forming unit 231 may be disposed at the inner space of the body 201, in correspondence to part of the body 201 to be immersed in water.

Although not shown, part of the body 201 to be exposed to the outside of water may be determined based on a position of an air bag disposed at the inner space of the body 201. Upon determination of the part of the body 201 to be exposed to the outside of water, part of the body 201 to be immersed in the water may be also determined.

Like the weight center forming unit 231, the air bag may be disposed at the inner space of the body 201, on a region rather than a central region. Thus, if the body 201 is in a floated state on a water surface, part where the air bag is arranged may be exposed to the outside of water, and part where the air bag is not arranged may be immersed in the water.

That is, the air bag may be disposed at the inner space of the body 201, in correspondence to part of the body 201 to be exposed to the outside of water.

So far, have been explained various methods for determining part of the body 201 to be immersed in water, and part of the body 201 to be exposed to the outside of the water when the body 201 is in a floated state on a water surface. However, the present invention is not limited to the above embodiments. That is, in the present invention, part of the body 201 to be immersed in water, and part of the body 201 to be exposed to the outside of the water may be determined in advance, when the body 201 is manufactured.

In the present invention, one of the first and second cameras 221, 222 may be disposed at part of the body 201 to be immersed in water, and another thereof may be disposed at part of the body 201 to be exposed to the outside of the water.

Hereinafter, a camera disposed at part of the body 201 to be immersed in water will be referred to as the first camera 221, and a camera disposed at part of the body 201 to be exposed to the outside of the water will be referred to as the second camera 222.

Hereinafter, an arranged state of the first and second cameras 221, 222 on the body 201 will be explained in more detail.

Referring to FIGS. 2B and 3A, a first virtual axis which connects a lower part and an upper part of the body 201 may be implemented.

The lower part of the body 201 may mean part where the weight center forming unit 231 is arranged. And the upper part of the body 201 may mean part facing the part where the weight center forming unit 231 is arranged. As aforementioned, the sound hole 252 for the speaker may be formed at the upper part of the body 201.

The first virtual axis 203 may be implemented in various manners. Hereinafter, a lengthwise direction of one first virtual axis 203 among various first virtual axes which can be implemented is referred to as a lengthwise direction of the body 201.

Referring to FIG. 2B, as aforementioned, the first virtual axis which connects the lower part and the upper part of the body 201 may be implemented. And one axis among axes crossing the first virtual axis 203 may be referred to as a second virtual axis 204. A lengthwise direction of the second virtual axis 204 is referred to as a widthwise direction of the body 201.

Referring to FIGS. 2B and 3A, the first and second cameras 221,222 may be arranged on the body 201 in a line, in the lengthwise direction of the body 201. Further, the first and second cameras 221, 222 may be arranged on the body 201 in a line with a preset interval therebetween, in the lengthwise direction of the body 201.

The weight center forming unit 231 is also arranged in the lengthwise direction of the body 201, together with the first and second cameras 221, 222. With such a configuration, when the body 201 is in a floated state on a water surface, the weight center forming unit 231, the first camera 221 and the second camera 222 may be sequentially arranged in the lengthwise direction of the body 201.

That is, referring to FIG. 3A, when the body 201 is in a floated state on a water surface, the water surface may be located between the first and second cameras 221, 222. Thus, the first camera 221 may be immersed in water, and the second camera 222 may be exposed to the outside of the water.

Accordingly, the first camera 221 may acquire a first image corresponding to an internal space of the water, and the second camera 222 may acquire a second image corresponding to an external space of the water. The acquired images may be transmitted to the mobile terminal 100 pre-set to communicate with the camera module 200. This will be explained later in more detail.

Referring to FIG. 3B, the weight center forming unit 231 may be formed to be moveable at the inner space of the body 201. That is, the weight center forming unit 231 may be formed to be moveable with respect to the body 201.

As the weight center forming unit 231 moves, the arranged state of the first and second cameras 221, 222 may be changed. This will be explained later in more detail.

Specifically, upon reception of a control command for changing the arranged state of the first and second cameras 221, 222, the controller 280 controls a driving unit (not shown) such that the weight center forming unit 231 moves.

More specifically, the control command for changing an arranged state of the first and second cameras 221, 222 may be received through the wireless communication unit 210 provided at the body 201. Alternatively, the control command may be input through the user input unit 224 formed at the body 201.

Referring to FIGS. 3A and 3B, upon reception of the control command, the weight center forming unit 231 is moved at the inner space of the body 201 in order to rotate the body 201.

More specifically, upon reception of the control command, the weight center forming unit 231 is moved at the inner space of the body 201 in a direction (e.g., a direction of 'd1'). The weight center forming unit 231 may be moved at the inner space of the body, in a direction of an edge region rather than a central region.

Once the weight center forming unit 231 is moved in a state where the body 201 floats on a water surface, the body 201 is rotated such that its part corresponding to a final position of the weight center forming unit 231 is immersed in water. As the body 201 is rotated, the weight center forming unit 231 may not be arranged any longer in the lengthwise direction of the body 201.

Referring to FIG. 3A, the lengthwise direction of the body 201 is almost the same as a direction perpendicular to a water surface. However, referring to FIG. 3B, the lengthwise direction of the body 201 crosses the direction perpendicular to the water surface. The expression 'almost the same' may mean not only that two directions are precisely identical to each other, but also that two directions are similar to each other with an error within a preset angle.

Referring to FIG. 3B, as the body 201 is rotated, the first and second cameras 221, 222 may be arranged at one side without being arranged at an upper side and a lower side based on the water surface, respectively. Alternatively, the first and second cameras 221, 222 may be arranged in a line, in a direction parallel to the water surface. Thus, each of the first and second cameras 221, 222 may capture a subject with a wider viewing angle.

Referring to FIGS. 3B and 3C, the weight center forming unit 231 may be moved in the widthwise direction of the body 201. As the weight center forming unit 231 is moved, both of the first and second cameras 221,222 may be arranged above or below the water surface.

So far, it has been explained that an arranged state of the first and second cameras 221, 222 is changed through the weight center forming unit 231. However, the arranged state of the first and second cameras 221, 222 may be also changed through the rotation unit 202. This will be explained in more detail with reference to the attached drawings.

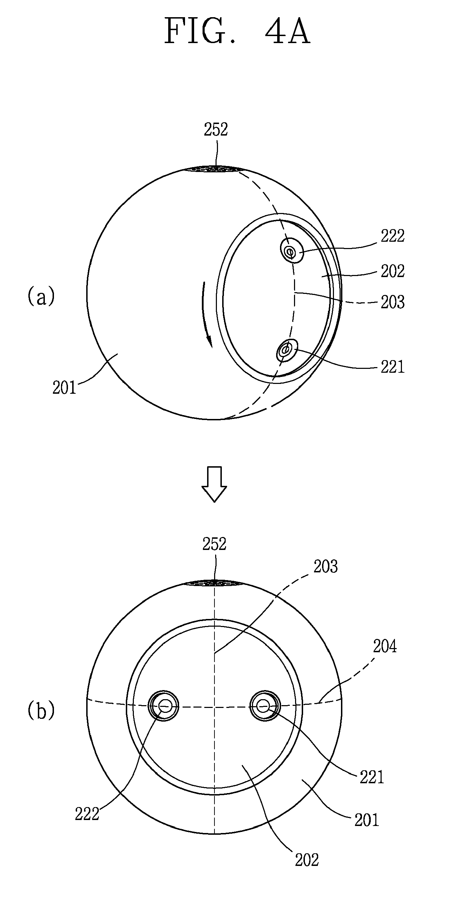

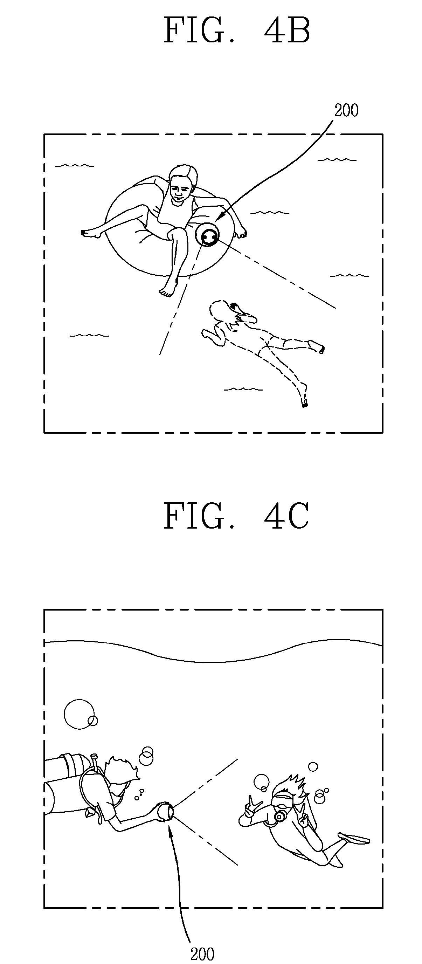

FIG. 4A is a conceptual view illustrating an operation of the rotation unit 202 of the camera module 200 according to the present invention. FIGS. 4B and 4C are conceptual views illustrating rotation of the rotation unit 202 based on a signal value by the sensing unit 240 of the camera module 200 according to the present invention.

The rotation unit 202, coupled to the body 201 so as to be rotatable with respect to the body 201, may be provided at the body 201 of the camera module 200 according to the present invention.

In this case, the first and second cameras 221, 222 may be coupled to the rotation unit 202, and may be formed to be rotatable together with the rotation unit 202 when the rotation unit 202 is rotated. That is, the first and second cameras 221, 222 may be formed so as to be rotatable with respect to the body 201.

Specifically, upon reception of a control command for changing an arranged state of the first and second cameras 221, 222, the controller 280 controls the driving unit (not shown) such that the rotation unit 202 moves.

More specifically, the control command for changing the arranged state of the first and second cameras 221, 222 may be received through the wireless communication unit 210 provided at the body 201. Alternatively, the control command may be input through the user input unit 224 formed at the body 201.

Referring to FIG. 4A, upon reception of the control command, the rotation unit 202 may be rotated clockwise or counterclockwise such that the first and second cameras 221, 222 may be arranged in a line in the widthwise direction of the body 201.

That is, the first and second cameras 221,222 may be arranged in the widthwise direction of the body 201, after being arranged in the lengthwise direction of the body 201. As the first and second cameras 221, 222 are arranged in the widthwise direction of the body 201, each of the first and second cameras 221,222 may capture an image with a larger viewing angle. Although not shown, the first and second cameras 221, 222 may be arranged in the lengthwise direction of the body 201, after being arranged in the widthwise direction of the body 201.

The control command for changing the arranged state of the first and second cameras 221, 222 may be related to a sensing value sensed by at least one of the aforementioned water sensor 241, the water pressure sensor 242, etc.

Specifically, the body 201 may be entirely immersed in water or may be entirely exposed to the outside of the water, as an external force is applied to the body 201. In this case, the rotation unit 202 may be rotated such that the first and second cameras 221, 222 may be arranged in a line in the widthwise direction of the body 201.

The case where the body 201 is entirely immersed in water may include a case where the body 201 is immersed in water within more than a preset range, as an external force is applied to the body 201. Likewise, the case where the body 201 is entirely exposed to the outside of the water may include a case where the body 201 is exposed to the outside of the water within more than a preset range, as an external force is applied to the body 201.

Referring to FIG. 4B, if it is determined that the body 201 is entirely exposed to the outside of the water based on a sensing value sensed by the water sensor 241, the water pressure sensor 242, etc., the controller 280 may control the driving unit such that the first and second cameras 221, 222 may be arranged in a line in the widthwise direction of the body 201, by rotation of the rotation unit 202.

Referring to FIG. 4C, if it is determined that the body 201 is entirely immersed in the water based on the sensing value, the controller 280 may control the driving unit such that the first and second cameras 221, 222 may be arranged in a line in the widthwise direction of the body 201, by rotation of the rotation unit 202.

So far, has been explained a method for changing an arranged state of the first and second cameras 221, 222 on the body 201, through the rotation unit 202.

Even if the first and second cameras 221, 222 are arranged in the widthwise direction of the body 201 by rotation of the rotation unit 202, the first and second cameras 221, 222 may not be arranged in a direction parallel to a water surface. In this case, the controller 280 may control a posture sensor provided at the body 201, etc., such that the first and second cameras 221, 222 may be arranged in a direction parallel to the water surface.

So far, have been explained a structure of the camera module 200, a control method related to a change of an arranged state of the cameras, etc.

In the drawings, only the first and second cameras 221, 222 are arranged at the body 201. However, the number of the cameras is not limited in the present invention. That is, a plurality of cameras may be arranged at part of the body 201 formed to be immersed in water. Alternatively, a plurality of cameras may be arranged at part of the body 201 formed to be exposed to the outside of the water. In this case, the camera module may simultaneously images above and below a water surface, at a wider viewing angle.

The camera module 200 according to the present invention may further include a supplementary body 300 formed to be coupled with the body 201.

The body 201 and the supplementary body 300 may be coupled to each other in various manners. For instance, a first magnet may be arranged at part of the body 201 where the supplementary body 300 is mounted, and a second magnet which generates an attractive force with the first magnet may be arranged at the supplementary body 300. A groove may be provided at one of the body 201 and the supplementary body 300, and a hook locked by the groove may be formed at another of the body 201 and the supplementary body 300.

The supplementary body 300 will be explained in more detail with reference to the attached drawings.

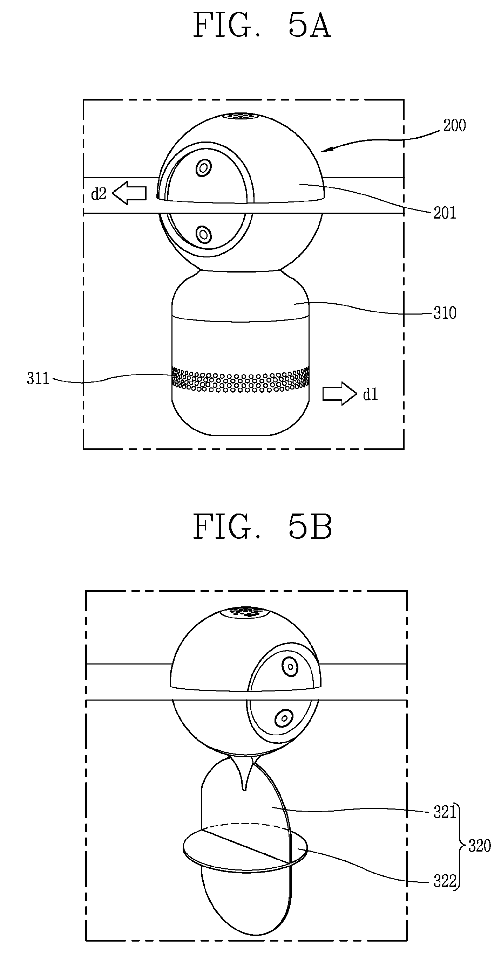

FIGS. 5A to 5D are conceptual views related to a type and a function of the supplementary body according to the present invention.

Referring to FIG. 5A, the supplementary body 300 may be a propellant 310 for providing a driving force to the body 201. Specifically, the propellant 310 may be mounted to part of the body 201 to be immersed in water.

A plurality of grooves 311 through which fuel is injected to the outside may be formed at the propellant 310. Once fuel is discharged from the inside of the propellant to the outside (e.g., 'd1') through the grooves 311, surrounding water may push the propellant 310 and the body 201 coupled to the propellant 310, in an opposite direction ('d2') to the direction ('d1'), through a principle of action and reaction. Through such a principle, the camera module 200 may be moved in a floated state on a water surface.

The fuel discharge direction may be controlled by the mobile terminal 100 which communicates with the camera module 200. Although not shown, the camera module 200 may receive, from the mobile terminal 100, a control command related to its moving direction. In this case, the controller 280 may control the supplementary body such that the fuel discharge direction may be controlled, based on the received control command.

Referring to FIG. 5B, the supplementary body 300 may be a pin 320 for controlling a posture of the body 201. The pin 320 allows the body 201 to float on a water surface with a more stable posture. Specifically, like the propellant 310, the pin 320 may be also mounted to part of the body 201 to be immersed in water.

The pin 320 may include a vertical pin 321 and a horizontal pin 322. The vertical pin 321 may be mounted to the body 201 so as to be arranged in the lengthwise direction of the body 201. The horizontal pin 322 may be coupled to the vertical pin 321 in a perpendicular state to the vertical pin 321.

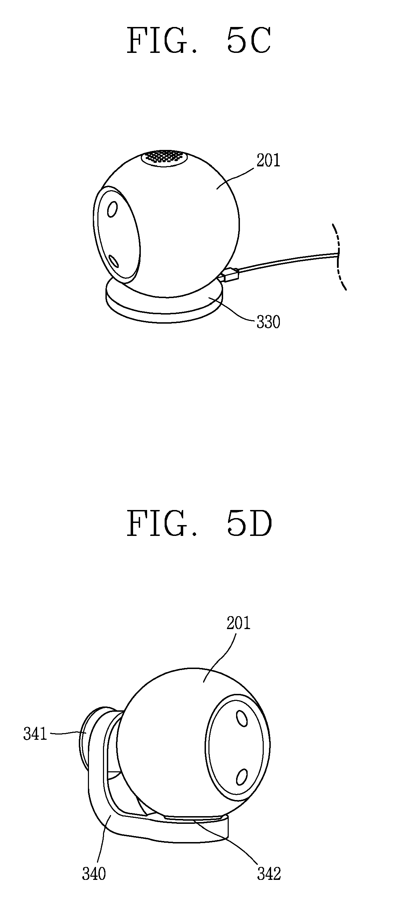

Referring to FIG. 5C, the supplementary body 300 may be a cradle 330 for wirelessly charging the body 201. Various types of electronic components, and a power supply unit 290 for providing power to the electronic components may be provided at the inner space of the body 201. That is, the various types of electronic components may be provided with power by a reciprocal operation between the cradle 330 and the power supply unit 290.

Referring to FIG. 5D, the supplementary body 300 may be a fixing body 340 for fixing a position of the body 201.

The fixing body 340 may be provided with a coupling portion 341 for attachment to a wall, etc. The fixing body 340 may be also provided with an accommodating portion 342 for accommodating the body 201 therein. That is, the fixing body 340 may be fixed to a predetermined position in a state where the body 201 has been accommodated in the accommodation portion 342. With such a configuration, the camera module 200 may be used in various states rather than a floated state on a water surface (more specifically, in a fixed state to a predetermined position).

So far, it has been explained that the body 201 of the camera module 200 according to the present invention may be coupled to the supplementary body 300 which may be implemented as various types. In the present invention, the body 201 may be formed to communicate with a preset external device.

Specifically, the wireless communication unit 210 for communicating with a preset external device may be provided at the body 201. If an event occurs from the preset external device, information about the event may be received through the wireless communication unit 210. The controller 280 may control the optical output unit 251 or the audio output unit 252 to output notification information indicating the occurrence of the event, based on the received event-related information.

This will be explained in more detail with reference to the attached drawings.

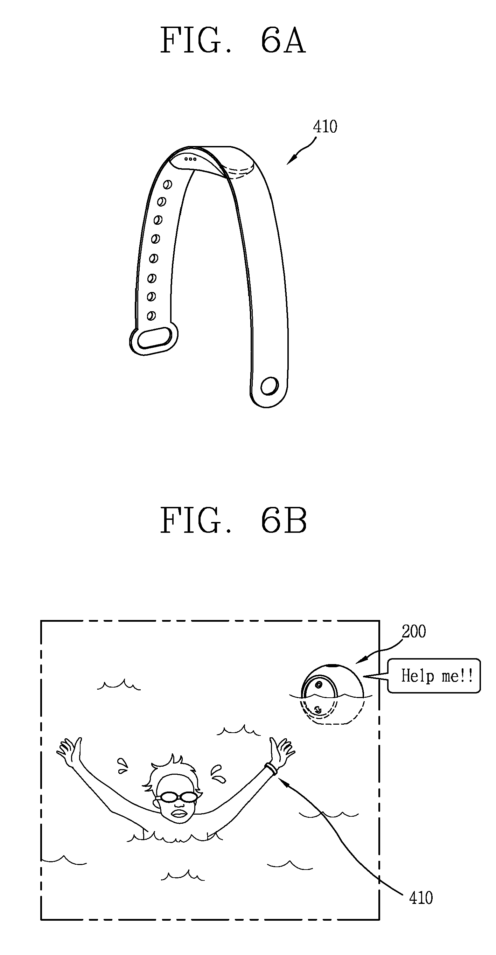

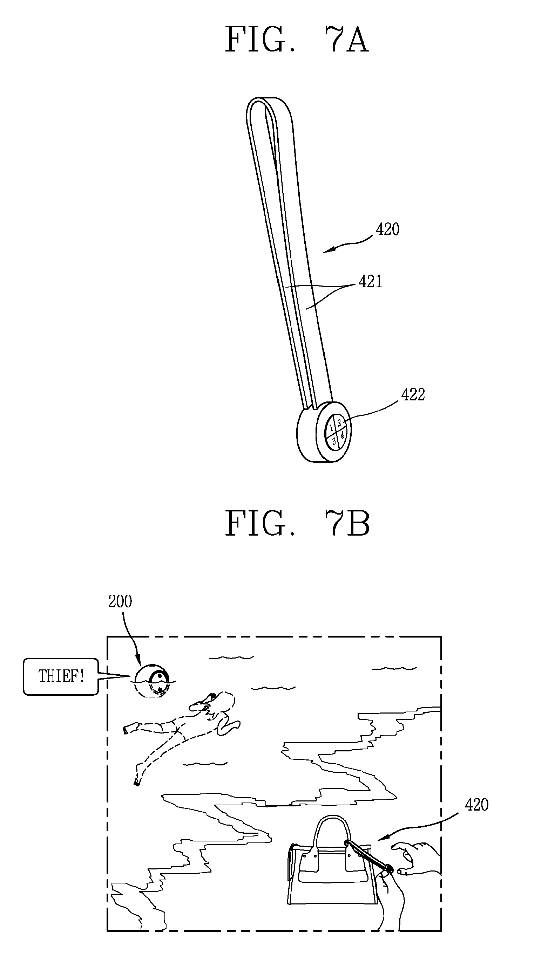

FIGS. 6A, 6B, 7A and 7B are conceptual views related to a type and a function of an external device which communicates with the camera module according to the present invention.

Referring to FIG. 6A, the external device may be a drowning prevention band 410 (hereinafter, will be referred to as a band). A sensor for sensing a movement of the band 410 may be provided in the band 410. For instance, the sensor may be an acceleration sensor, etc.

Specifically, the controller 280 may determine a case where a sensing value within more than a preset range is sensed by the acceleration sensor, etc., as occurrence of an event.

More specifically, if a sensing value within more than a preset range is sensed by the acceleration sensor, etc., the controller 280 may determine that the band 410 moves with an acceleration within more than a preset range.

For instance, referring to FIG. 6B, if a user wearing the band 410 moves his or her arms with a high speed in a drowned state, the band 410 may be moved with an acceleration within more than a preset range. In this case, a sensing value within more than a preset range may be sensed by the acceleration sensor, etc.

The controller 280 may determine occurrence of an event, based on the sensing value within more than a preset range. Then, the controller 280 may control the optical output unit 251 or the audio output unit 252 to output notification information indicating that the user has drowned. The notification information may be transmitted to the mobile terminal 100 paired with the camera module 200 through the wireless communication unit 210.

Referring to FIG. 7A, the external device may be a theft prevention tag 420 (hereinafter, will be referred to as a tag).

The tag may be composed of two arms 421. The two arms 421 may be provided with first and second magnets. The tag may be in a closed state by an attractive force between the first and second magnets. If an external force for widening the two arms from each other is applied to the two arms 421, the closed state of the tag may be converted into an open state.

The tag 420 may be provided with a user input unit 422. Numeric information may be applied to the tag 420 through the user input unit 422.

If a closed state of the tag 420 is converted into an open state, in a state where input numeric information is consistent with preset numeric information, the controller 280 may determine that no event has occurred. On the other hand, if the closed state of the tag 420 is converted into the open state, in a state where input numeric information is not consistent with the preset numeric information, the controller 280 may determine that an event has occurred.

For instance, referring to FIG. 7B, if the closed state of the tag 420 is converted into the open state, in a state where the preset numeric information has not been input, or in a state where other input numeric information different from the preset numeric information has been input, the controller 280 may determine that an event has occurred. In this case, the controller 280 may control the optical output unit 251 or the audio output unit 252 to output notification information indicating appearance of a thief. The notification information may be transmitted to the mobile terminal 100 paired with the camera module 200 through the wireless communication unit 210.

So far, it has been explained that the camera module 200 according to the present invention performs various functions while communicating with an external device. The camera module 200 according to the present invention may transmit images acquired by the first and second cameras 221, 222 to various types of external devices.

As aforementioned, at least one of the first image corresponding to an internal space of water and acquired by the first camera 221, and the second image corresponding to an external space of the water and acquired by the second camera 222, may be transmitted to the external device.

More specifically, the first and second images may be stored in a memory 270 of the body 201, and then the stored data may be transmitted to the external device.

Alternatively, the first and second images may be real-time transmitted to the external device. In this case, the transmitted first and second images may be real-time output to a display unit of the external device. The external device may be one of various types of external devices each having a display unit.

Hereinafter, a control method related to output of the first and second images will be explained in more detail, under an assumption that the external device is the mobile terminal 100.

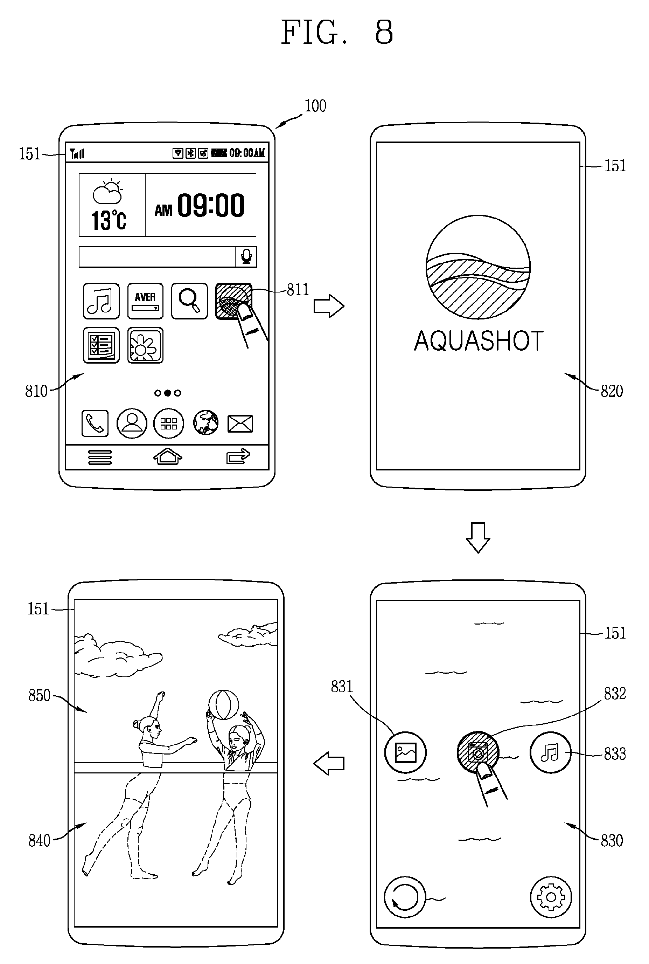

FIG. 8 is a conceptual view illustrating a method for controlling the mobile terminal, which is related to output of the first and second images.

Referring to FIG. 8, the controller 180 may output at least one of first and second images 840, 850 received from the camera module 200, to the display unit 151 of the mobile terminal 100.

Referring to a first drawing of FIG. 8, an application for executing a function related to the camera module 200 may be installed at the mobile terminal 100. The controller 180 may output an icon 811 of the application, to a home screen page 810 output to the display unit 151. The controller 180 executes the application based on a touch input applied to the icon 811.

Referring to second and third drawings of FIG. 8, upon execution of the application, a menu screen 830, one of execution screens of the application is output to the display unit 151. Before the menu screen 830 is output, a loading screen 820 indicating that data is being loaded may be output.

The menu screen 830 may include a first menu icon 831 related to output of a list of stored images, a second menu icon 832 related to real-time output of the first and second images, and a third menu icon 833 related to control of the speaker of the camera module 200.

Referring to third and fourth drawings of FIG. 8, the controller 180 controls the wireless communication unit 110 to receive at least one of the first and second images 840, 850 from the camera module 200, based on a touch input applied to the second menu icon 832. And the controller 180 controls the display unit 151 to output at least one of the first and second images 840, 850 received through the wireless communication unit 110.

In the drawings, both of the first and second images 840, 850 are received to be output. However, the present invention is not limited to this. That is, only one of the first and second images 840, 850 may be received. In this case, only the received image may be output. Alternatively, while both of the first and second images 840, 850 are being received, only one of the first and second images 840, 850 may be output.

Referring to a fourth drawing of FIG. 8, upon application of a control command for outputting both of the first and second images 840, 850, the controller 180 controls the display unit 151 to output the first image 840 corresponding to an internal space of water to a lower region of the display unit 151, and to output the second image 850 corresponding to an external space of the water to an upper region of the display unit 151. That is, the first and second images 840, 850 real-time input from the first and second cameras 221, 222, respectively may be simultaneously output to the display unit 151.

The controller 280 of the camera module 200 may integrate the first and second images 840, 850 as a single image, based on a user's selection, before the first and second images 840, 850 are transmitted. In this case, the integrated single image may be received by the mobile terminal 100.

Further, the first and second images 840, 850, which have been integrated as a single image, may be received by the mobile terminal 100, together with one of the first and second images 840, 850, based on a user's selection.

The controller 180 may output the received first and second images 840, 850 to the display unit 151 in the original state. Alternatively, the controller 180 may output the received first and second images 840, 850 to the display unit 151, after contracting or enlarging one of the first and second images 840,850. This will be explained in more detail with reference to the attached drawing.

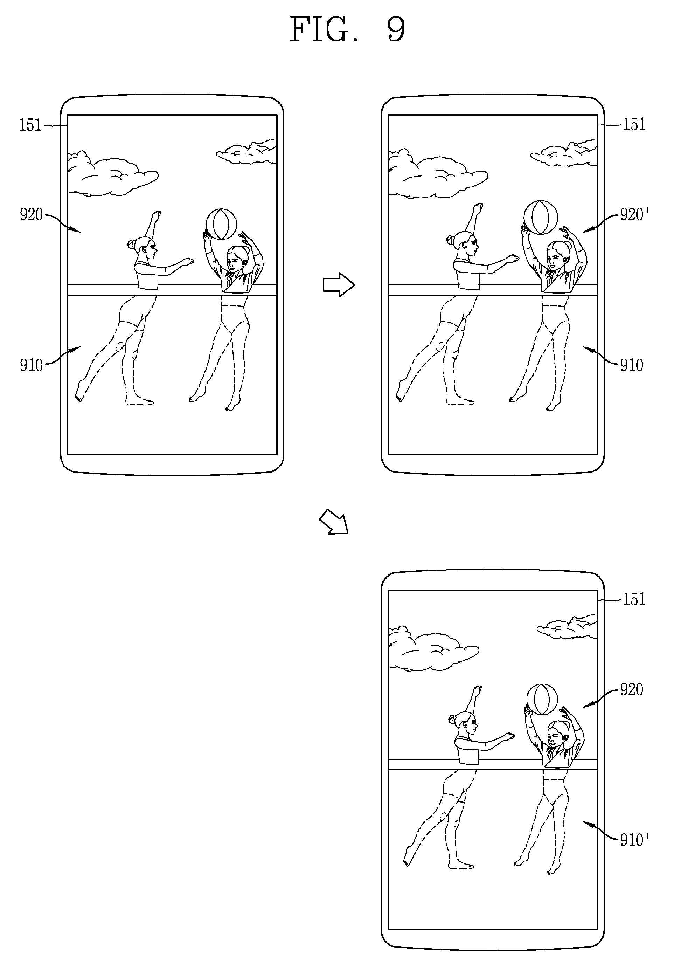

FIG. 9 is a conceptual view illustrating a method for controlling the mobile terminal according to an embodiment of the present invention, which is related to compensation of first and second images.

Referring to a first drawing of FIG. 9, on a first image 910 received from the first camera 221, a subject may be displayed with a distorted size due to a refraction of light occurring in water. That is, the same subject may be displayed on the first image 910 and a second image 920, with different sizes.

The controller 180 may compensate for the first and second images 910, 920 by a preset method, before the first and second images 910, 920 are output, such that the first and second images 910, 920 are combined with each other for a single natural image.

Referring to first and second drawings of FIG. 9, the controller 180 may enlarge the second image 920 by a preset magnification, such that a subject included in the second image 920 has a size balance with a subject included in the first image 910. The preset magnification may be a constant considering a refractive index of water.

As the compensated second image 920 is combined with the first image 910, an integrated single image may be viewed in a more natural manner.

Referring to first and third drawings of FIG. 9, the controller 180 may contract the first image 910 by a preset magnification, such that a subject included in the first image 910 has a size balance with a subject included in the second image 920. The preset magnification may be a constant considering a refractive index of water.

As the compensated first image 910 is combined with the second image 920, an integrated single image may be viewed in a more natural manner.

Although not shown, the controller 180 may compensate for at least one of the first and second images, such that the first and second images may be output with a similar white balance or illumination degree.

The first and second images may be viewed as a single natural image by the aforementioned various compensation methods by the controller.

So far, it has been explained that the first image is output to one half (a lower part) of the display unit 151, and the second image is output to another half (an upper part) of the display unit 151. However, output regions of the first and second images on the display unit 151 do not have a size limitation. That is, the size of the output regions of the first and second images on the display unit 151 may be variable, by a user's selection.

Hereinafter, a control method related to a change of output regions of first and second images will be explained in more detail with reference to the attached drawings.

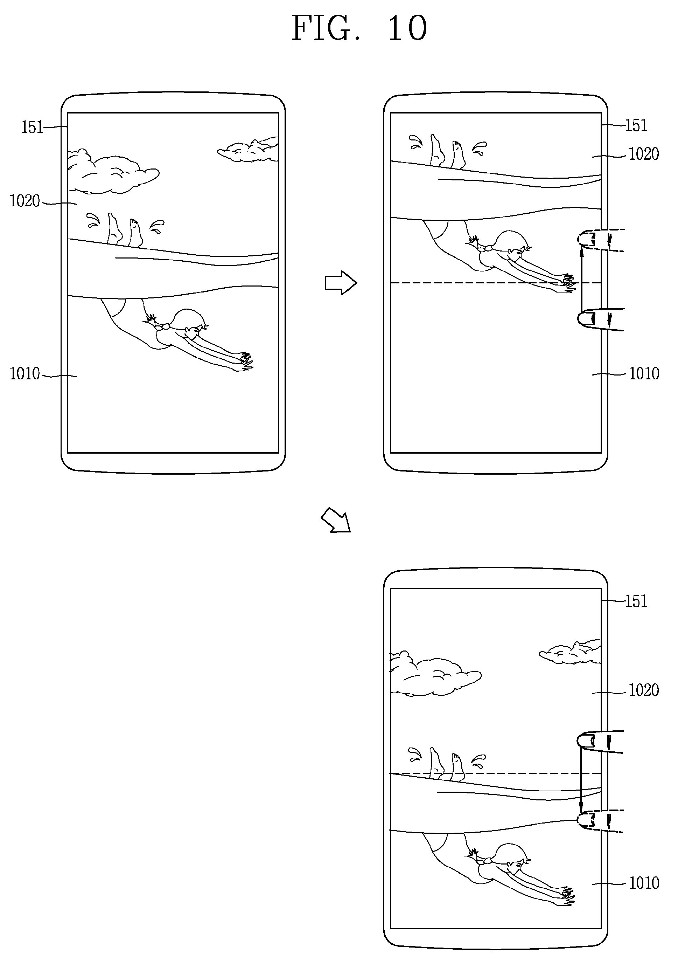

FIG. 10 is a conceptual view illustrating a method for controlling the mobile terminal according to an embodiment of the present invention, where a size of output regions of first and second images on the display unit 151 is changed.

Referring to FIG. 10, if a preset touch input is applied onto the display unit 151 in a state where first and second images 1010, 1020 have been output, the controller 180 may control the display unit 151 such that a ratio between output regions of the first and second images 1010, 1020 may be variable.

Referring to first and second drawings of FIG. 10, if a preset touch input (e.g., a drag touch input toward the second image from the first image) is applied onto the display unit 151 in a state where the first and second images 1010, 1020 have been output, the controller 180 may control the display unit 151 such that an output region of the first image 1010 may be increased in size.

Referring to first and third drawings of FIG. 10, if a preset touch input (e.g., a drag touch input toward the first image from the second image) is applied onto the display unit 151 in a state where the first and second images 1010, 1020 have been output, the controller 180 may control the display unit 151 such that an output region of the second image 1020 may be increased in size.

The preset touch input is not limited to the ones illustrated in the drawings, but may be implemented in various manners by a user's selection.

When first and second images are being output, the controller 180 may analyze a posture of a subject included in the first and second images based on information about the subject, and may display feedback information about the analyzed posture on the display unit 151. This will be explained in more detail with reference to the attached drawings.

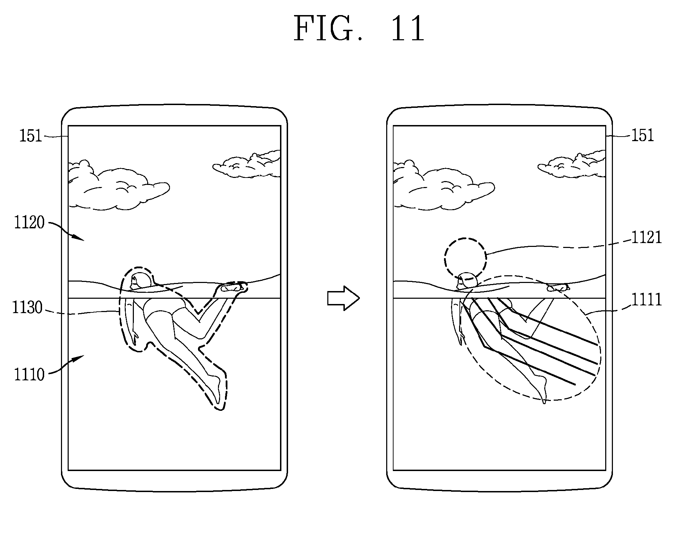

FIG. 11 is a conceptual view illustrating a method for controlling the mobile terminal, where a posture of a subject is analyzed based on information about the subject, and feedback information is generated based on the analyzed posture.

Referring to FIG. 11, as aforementioned, a first image 1110 corresponding to an internal space of water may be output to a lower region of the display unit 151, and a second image 1120 corresponding to an external space of the water may be output to an upper region of the display unit 151.

The controller 180 may analyze a posture of a subject 1130 included in the first and second images, thereby acquiring information about an operation of the subject.

Further, the controller 180 may compare the acquired information about an operation of the subject, with preset information, thereby determining whether the subject is swimming or not.

If it is determined that the subject is swimming, the controller 180 may determine that the subject is swimming with a preset posture, based on angle information of part of the subject 1130 corresponding to a water surface, etc.

If it is determined that the subject is not swimming with a preset posture, the controller 180 may control the display unit 151 such that feedback information 1111, 1121 about the preset posture may be output. A user may check and recognize a right swimming posture based on the feedback information 1111, 1121.

So far, it has been explained that both of the first and second images are output to the display unit 151. However, the present invention is not limited to this. That is, in the present invention, one of the first and second images may be output according to a user's request. This will be explained in more detail with reference to the attached drawings.

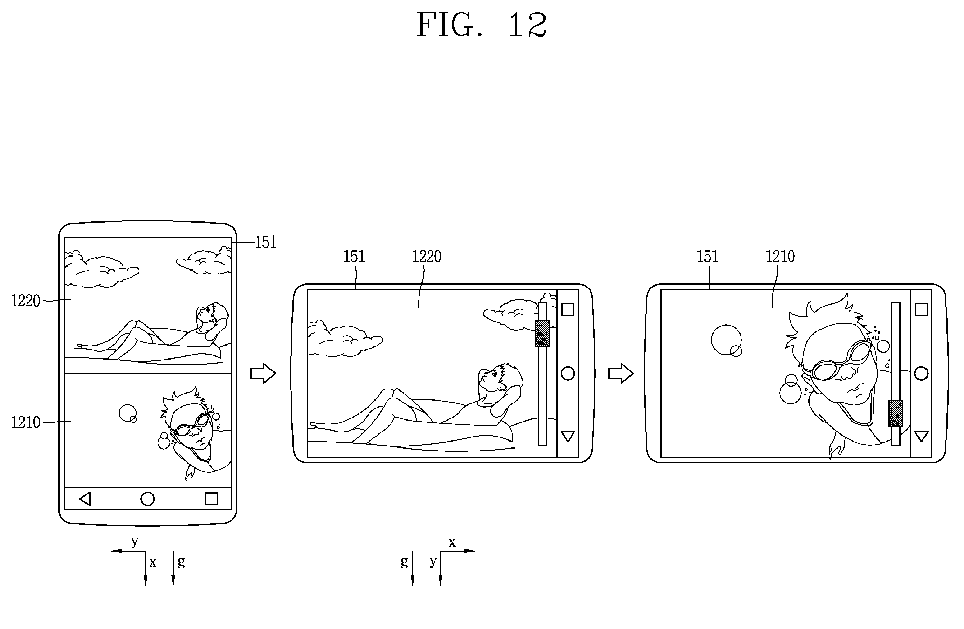

FIG. 12 is a conceptual view illustrating a method for controlling an image to be output between first and second images 1210, 1220, based on an arrangement direction of the display unit 151, according to an embodiment of the present invention.

The mobile terminal 100 according to the present invention may be provided with the sensing unit 140 for sensing a posture and a motion of the terminal body 100. For instance, the posture and the motion of the terminal body 100 may be sensed by at least one of an acceleration sensor, a magnetic sensor, a gravity (G) sensor, a gyroscope sensor, etc. included in the sensing unit 140.

The controller 180 determines whether the display unit 151 is arranged in a lengthwise direction or a widthwise direction based on a gravity, based on the sensed posture of the terminal body 100.

The lengthwise direction of the display unit 151 may be a direction corresponding to a long side of the display unit 151. For instance, referring to a first drawing of FIG. 12, the lengthwise direction of the display unit 151 may be an 'x'-direction.

The widthwise direction of the display unit 151 may be a direction corresponding to a short side of the display unit 151. For instance, referring to the first drawing of FIG. 12, the widthwise direction of the display unit 151 may be a 'y'-direction.

Referring to the first drawing of FIG. 12, if the display unit 151 is arranged such that the lengthwise direction ('x'-direction) of the display unit 151 is substantially identical to a gravitational direction ('g'-direction in the drawing), the controller 180 may control the display unit 151 such that both of the first and second images 1210, 1220 may be output.

As aforementioned, the first image 1210 corresponding to an internal space of water may be output to a lower region of the display unit 151, and the second image 1220 corresponding to an external space of the water may be output to an upper region of the display unit 151.

The context that two directions are substantially identical to each other may mean not only a case where the two directions are precisely identical to each other, but also a case where an angle formed between the two directions is less than a preset value.

Referring to a second drawing of FIG. 12, if the display unit 151 is arranged such that the widthwise direction ('y'-direction) of the display unit 151 is substantially identical to the gravitational direction ('g'-direction in the drawing), the controller 180 may control the display unit 151 such that one of the first and second images 1210, 1220 may be output.

In this case, the controller 180 may determine an image to be output to the display unit 151, between the first and second images 1210, 1220, based on a preset method or a user's selection.

For instance, the controller 180 may determine an image to be output to the display unit 151, between the first and second images 1210, 1220, based on a preset facial recognition method. That is, if a subject recognized as a user's face is included in only one of the first and second images 1210, 1220, the controller 180 may output the image including the subject recognized as the user's face, to the display unit 151.

Alternatively, the controller 180 may determine an image to be output to the display unit 151, based on a user's selection. For instance, referring to the second drawing of FIG. 10, if a user has preset the second image 1020 corresponding to an external space of water to be output, the controller 180 may control the display unit 151 such that the second image 1020 may be output.

In the present invention, if a user's request related to image conversion is applied to the display unit 151, in a state where only one of the first and second images 1210, 1220 has been output, the controller 180 may control the display unit 151 such that another of the first and second images 1210, 1220 may be output.

For instance, the user's request may be implemented by input of a preset touch input to the display unit 151.

Referring to second and third drawings of FIG. 12, if a preset touch input (e.g., a drag touch applied in one direction) is applied to the display unit 151, in a state where the second image 1220 has been output to the display unit 151, the first image 1210 may be output.

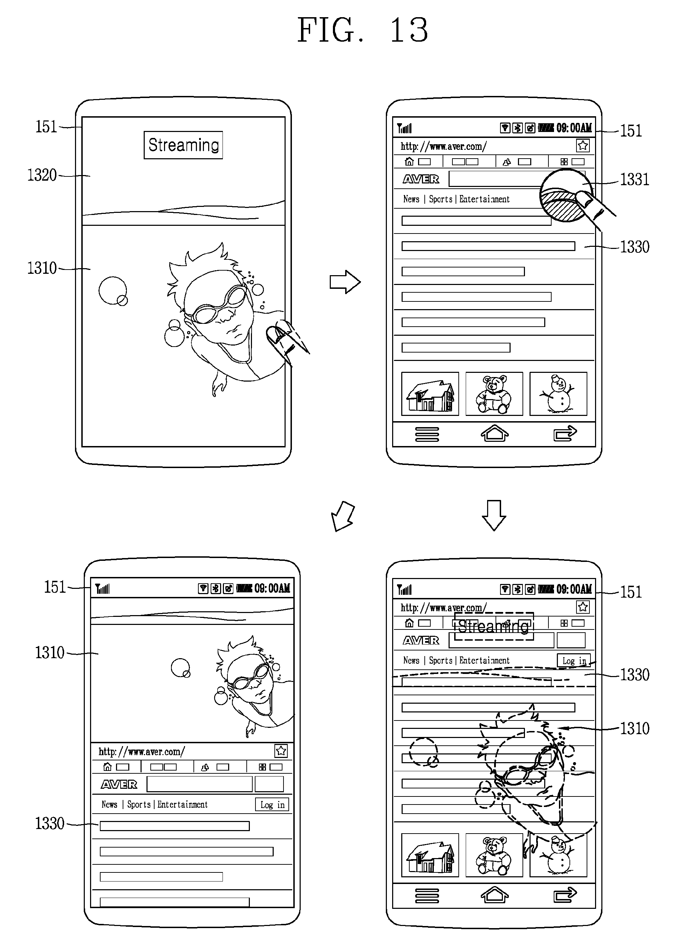

In the present invention, if a preset touch input is applied to the display unit 151, while first and second images are being real-time output to the display unit 151, screen information not including the first and second images may be output. This will be explained in more detail with reference to FIG. 13.

FIG. 13 is a conceptual view illustrating a control method related to output of at least one of first and second images 1310, 1320, and output of screen information not including the first and second images 1310,1320.

Referring to first and second drawings of FIG. 13, in a state where at least one of first and second images 1310, 1320 has been output, upon application of a user's request to output screen information 1330 not including the first and second images 1310, 1320, the controller 180 may control the display unit 151 such that an image object 1331 indicating that the images are being received, may be output together with the screen information 1330.

The user's request may be a preset touch input applied onto the display unit 151 (e.g., a plurality of tap touches applied onto the display unit 151), in a state where at least one of the first and second images 1310, 1320 has been output.

The screen information 1330 may be an execution screen of an application. For instance, referring to FIG. 13, the screen information 1330 may be an execution screen related to a web site.

The mobile terminal 100 according to the present invention may receive one of the first and second images 1310, 1320, even in a state where the screen information 1330 not including the first and second images 1310, 1320 has been output.

In this case, the controller 180 may control the display unit 151 such that the image object 1331 indicating that the images are being received, may be output together with the screen information 1330, in a state where the screen information 1330 not including the first and second images 1310, 1320 has been output.

The image object 1331 may be output in an overlapped state with the screen information 1330. Although not shown, if a preset touch input is applied to the image object 1331, the position of the image object 1331 on the screen information 1330 may be changed.

If a preset touch input is applied to the image object 1331, the controller 180 may control the display unit 151 such that at least one of the first and second images 1310, 1320 may be output in an overlapped manner with the screen information 1330.

Referring to second and third drawings of FIG. 13, if a preset touch input is applied to the image object 1331, the controller 180 may control the display unit 151 such that at least one of the first and second images 1310, 1320 being received may be output in an overlapped manner with the screen information 1330 being currently output.

In this case, an overlapped degree (a transparent degree) between at least one of the first and second images 1310,1320 and the screen information 1330 may be determined by a user's selection.

Referring to second and fourth drawings of FIG. 13, if a preset touch input is applied to the image object 1331, the controller 180 may control the display unit 151 such that at least one of the first and second images 1310, 1320 may be output to one region of the display unit 151 and the screen information 1330 may be output to another region of the display unit 151.

The position of the one region, where at least one of the first and second images 1310, 1320 is output, may be determined by a user's selection.

As aforementioned, both at least one of the first and second images 1310, 1320, and the screen information 1330 not including the first image 1310 and the second image 1320 are output to the display unit 151. As a result, a user may execute various tasks while monitoring a peripheral situation of the camera module 200.

If an object corresponding to a subject has not been sensed for more than a preset time, on the second image corresponding to an external space of water, the controller 180 may control the display unit 151 to output notification information thereon. This will be explained in more detail with reference to the attached drawings.

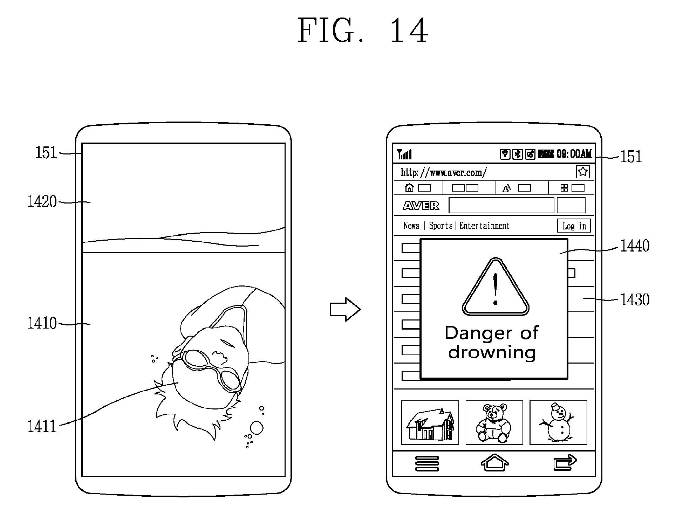

FIG. 14 is a conceptual view illustrating a control method related to output of notification information, based on whether a subject included in a second image has been sensed or not, according to an embodiment of the present invention.

Referring to FIG. 14, the mobile terminal 100 according to the present invention may receive at least one of first and second images 1410, 1420, from the camera module 200.

If an object 1411 which has been sensed within the second image 1420 corresponding to an external space of water is not sensed for more than a preset time, the controller 180 may determine that an event has occurred. Then, the controller 180 may control the display unit 151 to output notification information 1440 thereon, based on the occurrence of the event.

If screen information 1430 not including the first image 1410 and the second image 1420 has been output to the display unit 151, the notification information 1440 may be output in an overlapped manner with the screen information 1430.

Although not shown, upon occurrence of an event, the controller 180 may control the haptic module 153 or the audio output unit 152 such that various types of notification information may be output.

A user may recognize the occurrence of the event (e.g., drowning of a subject), through the notification information 1430. The notification information 1430 may allow the user to immediately react with the event.

In a state where at least one of the first and second images 1410, 1420 has been output to the display unit 151, if a user's request to store the output image is applied onto the display unit 151, the controller 180 may control the memory 170 to store therein the image.

The image may be stored not only in the memory 170, but also in a preset server.

More specifically, in a state where both of the first and second images 1410, 1420 have been output to the display unit 151, if a user's request to store the output images is applied onto the display unit 151, the first and second images may be stored in an integrated state.

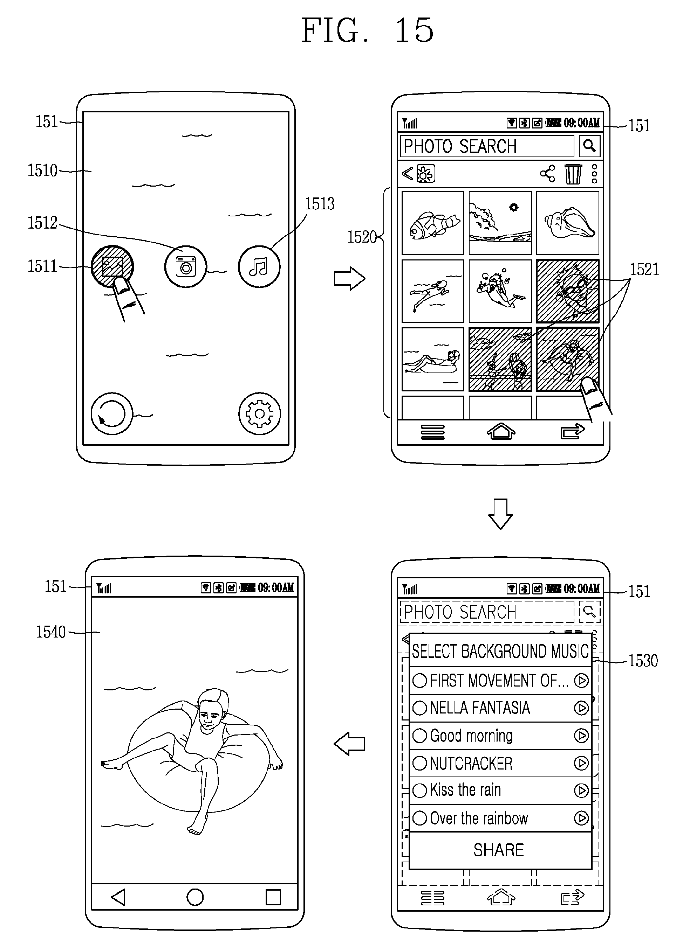

In the present invention, the image may be stored in the memory 170, in a state where music data selected by a user has been inserted into the image. This will be explained in more detail with reference to FIG. 15.

FIG. 15 is a conceptual view illustrating a control method related to storage of an image in a state where music data selected by a user has been inserted into the image.

As aforementioned, in the mobile terminal according to the present invention, an application for executing a function related to the camera module 200 may be installed.

Referring to a first drawing of FIG. 15, a menu screen 1510 related to the application may include a first menu icon 1511 related to output of a list of stored images, a second menu icon 1512 related to real-time output of first and second images, and a third menu icon 1513 related to control of the speaker of the camera module 200.

Referring to first and second drawings of FIG. 15, if a preset touch input is applied to the first menu icon 1511, thumbnail images 1520 corresponding to images stored in the memory 170 may be output. Through the thumbnail images 1520, a user may briefly check the images stored in the memory 170.

Referring to second and third drawings of FIG. 15, at least part 1521 among the thumbnail images 1520 may be selected by a user. Upon completion of the selection, a list 1530 of music data stored in the memory 170 or a preset server may be output.

Referring to third and fourth drawings of FIG. 15, upon selection of music data on the list 1530, the image may be stored in a state where the selected music data has been inserted into the image. The stored image 1540 may be output to the display unit 151.

Although not shown, if a preset touch input is applied to the third menu icon 1513, a list of music data stored in the memory or a preset server may be output. Upon selection of music data on the list, the selected music data may be output through the speaker of the camera module 200.

The camera module according to the present invention is provided with the body formed to have buoyancy such that at least part thereof is exposed to the outside of water while at least part thereof is immersed in the water. With such a configuration, a plurality of cameras may be arranged at part of the body to be immersed in water, and part of the body to be exposed to the outside of the water. Thus, the plurality of cameras of the camera module may simultaneously capture an image corresponding to an internal space of water and an image corresponding to an external space of the water.

The plurality of cameras of the camera module according to the present invention may be arranged in either a lengthwise direction of the body or a widthwise direction of the body. Thus, the camera module may capture images at various viewing angles, by a user's selection.

The mobile terminal according to the present invention may simultaneously output an image corresponding to an internal space of water and an image corresponding to an external space of the water. Further, as the image corresponding to the internal space of the water and the image corresponding to the external space of the water are output to a lower region and an upper region of the display unit, respectively, the images may be viewed as a single natural image.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A camera module, comprising:
a body (201) to have buoyancy such that, when in a floated state, a first part of the body (201) is exposed to outside of water while a second part of the body (201) is immersed in the water;
a first camera (221) at the body (201) to be immersed in the water when the body (201) is in the floated state; and
a second camera (222) at the body (201) to be exposed to the outside of the water when the body (201) is in the floated state,
wherein the first camera (221) is configured to capture a first image corresponding to the immersion in the water, and the second camera (222) is configured to capture a second image corresponding to outside of the water.

2. The camera module of claim 1, wherein the first camera (221) and the second camera (222) are provided along a lengthwise direction of the body (201).

3. The camera module any one of claims 1 and 2, comprising a weight center forming unit (231) at an inner area of the second part of the body (201).

4. The camera module of claim 3, comprising a wireless communication unit(210) at the body (201), and
wherein in response to the wireless communication unit(210) receiving a control command for changing an arrangement of the first and second cameras (221, 222), the weight center forming unit (231) is moved within the inner area such that the body (201) moves.

5. The camera module any one of claims 1 to 4, comprising a rotation device (202) to rotatably couple to the body (201), and
wherein the first and second cameras (221, 222) are coupled to the rotation device (202) so as to be rotatable with respect to the body (201).

6. The camera module of claim 5,comprising a wireless communication unit(210) at the body (201), and
wherein in response to the wireless communication unit(210) receiving a control command for changing an arrangement of the first and second cameras (221, 222), the rotation device (202) is to rotate such that the first and second cameras (221, 222) are arranged along a widthwise direction of the body (201).

7. The camera module of claim 5,wherein when the body (201) is entirely in water or is entirely outside of the water, the rotation device is to rotate such that the first and second cameras (221, 222) are arranged along a widthwise direction of the body (201).

8. A mobile terminal configured to receive at least one of the first image and the second image, from the camera module any one of claims 1 to 7, the mobile terminal comprising:
a terminal body (100);
a display (151) at a surface of the terminal body (100); and
a controller (180) configured to control the display (151) such that the first image corresponding to immersion in the water is output at a first region of the display (151), and the second image corresponding to outside of the water is output at a second region of the display (151), in response to a control command for displaying both the first and second images.

9. The mobile terminal of claim 8, wherein the controller (180) controls the display (151) such that the first image is contracted by a preset magnification based on a received state of the first image, and
wherein the controller (180) controls the display (151) such that the second image is enlarged by a preset magnification based on a received state of the second image.

10. The mobile terminal any one of claims 8 and 9, wherein in response to a preset touch input at the display (151) while the first and second images are displayed, the controller (180) controls the display (151) such that a ratio between a display region of the first image and a display region of the second image is variable.

11. The mobile terminal any one of claims 8 to 10, wherein in response to a control command for outputting only one of the first and second images, the controller (180) determines an image to be output at the display (151).

12. The mobile terminal any one of claims 8 to 11, wherein in response to a user's request related to image conversion at the display (151), the controller (180) controls the display (151) such that another of the first and second images is displayed.

13. The mobile terminal any one of claims 8 to 12, comprising a sensing device for sensing a posture and a motion of the terminal body (100),
wherein the controller (180) determines whether the display (151) is arranged in a lengthwise direction or a widthwise direction, based on the sensed posture of the terminal body (100),
wherein when the controller (180) determines that the display (151) is arranged in the lengthwise direction, the controller (180) controls the display (151) to display both the first and second images, and
wherein when the controller (180) determines that the display (151) is arranged in the widthwise direction, the controller (180) controls the display (151) to display only one of the first and second images.

14. The mobile terminal any one of claims 8 to 13, wherein in response to a user's request to output screen information not including the first and second images, the controller (180) controls the display (151) such that an image object indicating that the images are being received, is displayed together with the screen information.

15. The mobile terminal any one of claims 8 to 14, wherein in response to a user's request to output screen information not including the first and second images, the controller (180) controls the display (151) such that at least one of the first and second images is displayed at a first region of the display (151) and the screen information is displayed at a second region of the display (151).
